# FASCICULE DE BREVET EUROPEEN

(11) **EP 0 586 357 B1**
(45) Date de publication et mention de la délivrance du brevet: **03.11.1999**
(21) Numéro de dépôt: 93870180.2
(22) Date de dépôt: 30.08.1993
(51) Int. Cl.: C08F 10/00, C08F 4/642

(54) **Procédé de polymérisation d'oléfines avec un système catalytique à haute activité**
Verfahren zur Olefinpolymerisation mit einem hochaktiven Katalysatorsystem
Process for the polymerization of olefins with high-activity catalyst system

(30) Priorité: 31.08.1992 BE 9200772
(43) Date de publication de la demande: 09.03.1994
(73) Titulaire: FINA RESEARCH S.A., B-7181 Seneffe (Feluy) (BE)
(72) Inventeur: Vermeiren, Walter, B-3530 Helchteren (BE); Brems, Patrick, D-67545 Worms (DE); Hinnekens, Hervé, B-9000 Gent (BE)

(56) Documents cités:
- EP-A- 0 328 348
- EP-A- 0 515 132

## Description

La présente invention concerne d'une manière générale un procédé pour la polymérisation de l'éthylène et/ou d'autres oléfines, en utilisant de nouveaux systèmes de catalyseurs de Ziegler à haute productivité. Il s'agit en particulier d'un procédé pour préparer du polyéthylène et des copolymères d'éthylène et d'autres alpha-oléfines, comme le propylène, le butène et l'hexène, à des températures comprises entre -50 et 200°C, à l'aide d'un système de Ziegler à haute productivité obtenu à partir d'un catalyseur contenant un métal de transition et d'un alumoxane comme cocatalyseur.

On sait depuis 1955 que les combinaisons de composés de métaux de transition et de métal-alkyles où le métal provient d'un groupe principal, ce qu'on appelle les catalyseurs de Ziegler, sont à même de polymériser l'éthylène même sous basse pression. On connaît en outre, à partir de DE-A-26 08 863 et 26 08 533, des procédés de polymérisation de ce genre, dans lesquels on utilise des catalyseurs de Ziegler non-halogénés, qui sont constitués de bis(cyclopentadiényl)titane- ou zirconium-dialkyle et d'un dérivé de trialkylaluminium et d'eau ou d'un produit de la réaction d'un dérivé de trialkyl-aluminium et d'eau.

Ces systèmes catalytiques permettent d'influencer dans une certaine mesure les poids moléculaires finals par la variation de la température et des proportions relatives de l'eau, mais leur productivité, c'est-à-dire les rendements pondéraux par rapport à la quantité de métal de transition mis en oeuvre, n'est pas très bonne.

On connaît également, à partir de EP 35242, un procédé dans lequel la polymérisation est effectuée en présence d'un système catalytique, composé (1) d'un dérivé diméthylique du bis-(cyclopentadiényl)-zirconium et (2) d'un méthyl-alumoxane de la formule générale

(R-Al-O)ₘ ,

dans laquelle R représente un radical méthyle et m est un nombre entier valant de 5 à 20.

EP-A-0,328,348 concerne un système catalytique pour la polymérisation d'oléfines. Deux modes de préparation du catalyseur y sont décrits. Dans le premier mode de préparation, les trois composantes du système catalytique, c'est-à-dire le métallocène, l'alumoxane et l'eau, sont introduits simultanément dans un hydrocarbure ou un mélange oléofinique. Dans le second mode de préparation, l'alumoxane et l'eau sont d'abord mélangés avant d'y ajouter le métallocène.

La présente invention concerne un procédé de polymérisation ou de copolymérisation d'oléfines en utilisant un système catalytique de Ziegler obtenu à partir d'un catalyseur de type métallocène contenant un métal de transition et d'un alumoxane comme cocatalyseur, caractérisé en ce qu'on ajoute au système catalytique une quantité d'eau telle que le rapport molaire eau : alumoxane est compris entre 1:100 et 1:2 et de préférence entre 1:20 et 1:3 ou mieux entre 1:10 et 1:4.

L'homme de l'art croit que l'addition d'eau aux systèmes catalytiques de la présente invention nuit à l'activité de ces systèmes.

Or, la Demanderesse a trouvé de manière tout à fait inattendue que l'addition d'une faible quantité d'eau aux systèmes catalytiques formés d'un métallocène et d'un alumoxane permettait d'améliorer considérablement l'activité de ces systèmes catalytiques.

Conformément à la présente invention, l'eau est ajoutée au système catalytique métallocène/alumoxane dans son ensemble.
Sans vouloir se lier à une théorie, on pense que l'addition d'eau serait possible parce que l'alumoxane pourrait être stabilisé en présence du métallocène. L'addition d'eau peut se faire sous toute sorte de forme, par exemple sous forme d'eau pure, en utilisant un solvant saturé en eau ou encore sous forme de sels hydratés comme, par exemple le CeCl₃.7H₂O ou l'Al(SO₄)₃.18H₂O. On utilisera de préférence un solvant saturé en eau tel que, par exemple, le toluène saturé en eau.

Les catalyseurs de type métallocène contenant un métal de transition sont connus dans l'art antérieur. En principe, ils répondent à la formule générale (Cp)ₘ Rₙ M Qₖ dans laquelle chaque Cp est le même ou différent et représente un cyclopentadiényl ou un cyclopentadiényl substitué par un ou plusieurs radicaux hydrocarbyls tels que les radicaux alkyl, alkényl, aryl, arylalkyl ou alkylaryl ayant de 1 à 20 atomes de carbone, R est un pont structurel entre deux cycles Cp, M est un métal de transition du groupe IVb du tableau périodique, chaque Q est le même ou différent et représente un hydride ou un groupe hydrocarbyl ayant de 1 à 20 atomes de carbones ou un halogène, m=1 à 3, n=0 ou 1, et k est tel que la somme (m+k) est égale à l'état d'oxydation de M.

Les ponts structurels R typiques entre les cycles Cp comprennent par exemple les radicaux alkylènes ayant de 1 à 4 atomes de carbone, et les ponts hétéroatomes tels que le dialkyl de germanium ou de silicium, l'alkyl phosphine ou l'alkyl amine.

Les alumoxanes utilisés comme cocatalyseur des systèmes catalytiques utilisés dans le cadre de la présente invention sont bien connus dans l'art antérieur. Ils comprennent les alkyls alumoxanes oligomériques, linéaires et/ou cycliques représentés par les formules :
R-(AlR-O)ₙ-Al R₂ pour les alumoxanes linéaires, oligomériques, et
(-AlR-O)ₘ pour les alumoxanes cycliques, oligomériques, où n est compris entre 1 et 40, de préférence entre 1 et 20, m est compris entre 3 et 40, de préférence entre 3 et 20 et R est un groupement alkyl de C₁ à C₈, de préférence un méthyl. En général, la préparation d'alumoxanes à partir de, par exemple, triméthylaluminium et d'eau, conduit à un mélange de composants linéaires et cycliques.

Les alumoxanes peuvent être préparés de nombreuses manières. De préférence, ils sont préparés en mettant en contact de l'eau avec une solution de trialkylaluminium, par exemple du triméthylaluminium, dans un solvant organique approprié tel que le benzène, le toluène ou le xylène.

Les conditions de polymérisation et de copolymérisation sont bien connues dans l'art antérieur. La polymérisation peut se faire en solution, en suspension ou en masse, en général à une température allant de -50°C à 200°C, sous pression atmosphérique, sous-atmosphérique ou supra-atmosphérique. On peut ajouter les adjuvants conventionnels de polymérisation tels que l'hydrogène par exemple.

Des exemples de procédures de polymérisation qui peuvent être utilisées sont décrites dans la demande de brevet européen EP 284708 qui est incorporé ici par référence ainsi que dans le brevet européen EP 200351.

On peut également effectuer une étape de prépolymérisation. Les conditions de prépolymérisation sont connues dans l'art antérieur. Elles sont décrites, par exemple, dans la demande de brevet européen EP 279153.

Selon un mode particulier, la Demanderesse a trouvé que la présente invention était applicable à la copolymérisation d'éthylène et d'alpha-oléfines ayant de 3 à 20 atomes de carbones.

Les exemples qui suivent servent à illustrer la présente invention.

### Exemples

Un réacteur de polymérisation en continu de 2 1 est chargé avec du méthylaluminoxane (MAO) et du biscyclopentadiényl zirconium dichlorure (Cp₂ZrCl₂). De l'éthylène et du propylène sont chargés, simultanément et en continu dans le réacteur, avec un débit respectif de 700 et 1.400 ml/min. La polymérisation est effectuée à une température de 60°C, sous une pression de 5,8 bar et avec un temps de résidence de 75 min.

### Exemple comparatif O

On utilise 300 ml de cyclohexane comme solvant.
Les quantités respectives de Cp₂ZrCl₂ et MAO sont indiquées dans le tableau 1. L'activité du catalyseur et le rendement de polymérisation sont également indiquées dans le tableau 1.

### Exemple 1

On utilise 150 ml de cyclohexane comme solvant.
1,3 mmoles d'eau pure est ajoutée au système catalytique.
Toutes les autres caractéristiques sont indiquées au tableau 1.

### Exemple comparatif 2

On utilise 136 ml de toluène comme solvant.
Juste avant son introduction dans le réacteur, le MAO est mis en contact avec 164 ml de toluène saturé en eau (0,033% en poids d'eau), ce qui correspond à une addition de 2,62 mmoles d'H₂O au système catalytique.

### Exemple 3

On utilise comme solvant 136 ml de cyclohexane et 164 ml de toluène saturé en eau (0,033% en poids d'eau), ce qui correspond à 2,62 mmoles d'H₂O.

### Exemple 4

On utilise comme solvant 300 ml de cyclohexane.

Avant introduction du système catalytique, on ajoute dans le réacteur 0,13 g de CeCl₃.7H₂O, ce qui correspond à une addition de 2,44 mmoles d'H₂O.

Tous les résultats sont indiqués au tableau 1.

**Tableau 1**

| Ex | Cp₂Z₂Cl₂ (mmole) | MAO (mmole) | H₂O (mmole) | Al/Z₂ | Rendement (g) | Activité (g/gh) | |
|---|---|---|---|---|---|---|---|
| | | | | | | Z₂ | Al |
| 0 | 0,036 | 13,1 | 0 | 364 | 114,5 | 27893 | 259 |
| 1 | 0,018 | 6,6 | 1,3 | 367 | 69,0 | 33618 | 310 |
| 2 | 0,036 | 13,1 | 2,62 | 364 | 136,6 | 33277 | 309 |
| 3 | 0,036 | 13,1 | 2,62 | 364 | 175,6 | 42778 | 397 |
| 4 | 0,036 | 13,1 | 2,44 | 364 | 117,7 | 28663 | 266 |

## Revendications

1. Procédé de polymérisation ou de copolymérisation d'oléfines en utilisant un système catalytique obtenu à partir d'un catalyseur de type métallocène contenant un métal de transition et d'un alumoxane comme cocatalyseur, caractérisé en ce qu'on ajoute au système catalytique dans son ensemble (métallocène + co-catalyseurs) une quantité d'eau telle que le rapport molaire eau : alumoxane est compris entre 1:100 et 1:2.

2. Procédé selon la revendication 1 caractérisé en ce que le rapport molaire eau : alumoxane est compris entre 1:20 et 1:3, de préférence entre 1:10 et 1:4.

3. Procédé selon l'une des revendications 1 et 2, caractérisé en ce que l'eau est ajoutée sous forme d'eau pure.

4. Procédé selon l'une des revendications 1 et 2, caractérisé en ce que l'eau est ajoutée sous forme d'un solvant saturé en eau.

5. Procédé selon la revendication 4 caractérisé en ce que le solvant est du toluène saturé en eau.

## Patentansprüche

1. Verfahren zur Polymerisation oder Copolymerisation von Olefinen unter Verwendung eines katalytischen Systems, welches ausgehend von einem Katalysator der Art Metallocen, welches ein Übergangsmetall enthält, und einem Alumoxan als Cokatalysator erhalten wird, dadurch gekennzeichnet, daß dem katalytischen System in seiner Gesamtheit (Metallocen + Cokatalysatoren) eine Menge Wasser in dem Molverhältnis Wasser : Alumoxan zwischen 1 : 100 und 1: 2 zugesetzt wird.

2. Verfahren gemäß Anspruch 1, dadurch gekennzeichnet, daß das Molverhältnis Wasser : Alumoxan zwischen 1 : 20 und 1 : 3, vorzugsweise zwischen 1 : 10 und 1 : 4 liegt.

3. Verfahren gemäß einem der Ansprüche 1 und 2, dadurch gekennzeichnet, daß das Wasser in Form von reinem Wasser zugesetzt wird.

4. Verfahren gemäß einem der Ansprüche 1 und 2, dadurch gekennzeichnet, daß das Wasser in Form eines mit Wasser gesättigten Lösemittels zugesetzt wird.

5. Verfahren gemäß Anspruch 4, dadurch gekennzeichnet, daß das Lösemittel mit Wasser gesättigtes Toluol ist.

## Claims

1. Method for the polymerization or copolmerization of olefins using a catalytic system obtained from a catalyst of the metallocene type containing a transition metal and an alumoxane as co-catalyst, **characterised in that** there is added to the catalytic system in its entirety (metallocene + co-catalysts) a quantity of water such that the molar ratio water : alumoxane is between 1:100 and 1:2.

2. Method according to claim 1, **characterised in that** the molar ratio water : alumoxane is between 1:20 and 1:3, preferably between 1:10 and 1:4.

3. Method according to one of claims 1 and 2, **characterised in that** the water is added in the form of pure water.

4. Method according to one of claims 1 and 2, **characterised in that** the water is added in the form of a solvent saturated in water.

5. Method according to claim 4, **characterised in that** the solvent is toluene saturated in water.
